# EUROPÄISCHE PATENTANMELDUNG

(11) **EP 2 159 432 A2**
(43) Veröffentlichungstag der Anmeldung: **03.03.2010**
(21) Anmeldenummer: 09168071.0
(22) Anmeldetag: 18.08.2009
(51) Int. Cl.: F16B 37/04, E05C 1/00

(54) **Nutenstein**

(30) Priorität: 29.08.2008 DE 102008045080
(71) Anmelder: ROTO FRANK AG, 70771 Leinfelden-Echterdingen (DE)
(72) Erfinder: Hanel, Dirk, 71144, Steinenbronn (DE); Siegler, Martin, 73230, Kirchheim/Teck (DE)
(74) Vertreter: Kohler Schmid Möbus

(57) **Zusammenfassung**

Bei einem Nutenstein (2, 3, 30) zur Befestigung eines Bauteils (1) an einer hinterschnittenen Nut (61) eines Fensters, einer Tür oder dgl., mit zwei sich gegenüber liegenden Enden (6, 7; 8, 9; 31, 32) weisen die gegenüber liegenden Enden (6, 7; 8, 9; 31, 32) unterschiedlich gekrümmte stirnseitige Anlageflächen (10, 11; 12, 13; 33, 34) zur Anlage an einer Nutwand auf.

## Beschreibung

Die Erfindung betrifft einen Nutenstein zur Befestigung eines Bauteils an einer hinterschnittenen Nut eines Fensters, einer Tür oder dgl., mit zwei sich gegenüberliegenden Enden.

Zur Befestigung von Bauteilen, insbesondere Beschlagteilen, an Profilen mit hinterschnittenen Nuten, wie beispielsweise einem Rahmen eines Fensters oder einer Tür, ist es bekannt, Nutensteine zu verwenden, die in die Nut eingeführt werden und anschließend verdreht werden, so dass sie die Hinterschneidungen der hinterschnittenen Nut hintergreifen.

Aus der DE 201 13 607 U1 ist ein Drehkipp-Beschlag bekannt, der über einen Nutenstein an einem Profil fixiert wird. Der Nutenstein weist zwei gegenüberliegende gekrümmte Enden auf. Die Krümmung ist so gestaltet, dass der Nutenstein bei unterschiedlich breiten Profilen zum Einsatz kommen kann. Der Nutenstein ist symmetrisch ausgebildet.

Der bekannte Nutenstein ist verwendbar, wenn die Nutöffnung sich im Wesentlichen mittig an der hinterschnittenen Nut befindet, also die Hinterschneidungen etwa gleich breit sind und der Drehpunkt des Nutensteins mittig in der Nut angeordnet wird. Werden jedoch Profile mit unterschiedlichen Nutbreiten verwendet, wobei die eine Hinterschneidung der Nut im Wesentlichen immer dieselbe Breite hat und die Breite der anderen Hinterschneidung variieren kann, so ist die Öffnung der hinterschnittenen Nut häufig nicht mittig an der Nut angeordnet. Durch einen symmetrischen Nutenstein kann nicht sichergestellt werden, dass dieser mit beiden Enden an den Nutwandungen anliegt.

Aufgabe der vorliegenden Erfindung ist es deshalb, einen Nutenstein bereitzustellen, der den oben genannten Anforderungen genügt.

Gelöst wird diese Aufgabe durch einen Nutenstein der eingangs genannten Art, wobei die gegenüberliegenden Enden unterschiedlich gekrümmte stirnseitige Anlageflächen zur Anlage an einer Nutwand aufweisen. Durch diese Maßnahme ist es möglich, den Nutenstein bei unterschiedlichsten Profilen mit unterschiedlich breiten hinterschnittenen Nuten und unterschiedlich breiten Hinterschneidungen zu verwenden. Es ist bei diesem Nutenstein sichergestellt, dass beide Enden des Nutensteins mit einer Nutwandung in Anlage kommen. Dadurch wird eine sichere Halterung des zu befestigenden Bauteils gewährleistet. Insbesondere kann mit einem solchen Nutenstein eine Grundplatte eines Ecklagerbeschlags zuverlässig an einem Rahmen, der eine hinterschnittene Nut aufweist, festgelegt werden.

Besonders bevorzugt ist es, wenn der Nutenstein bezüglich einer Mittenlängsebene unsymmetrisch ausgebildet ist. Weiterhin ist der Nutenstein vorzugsweise bezüglich eines Drehpunktes unsymmetrisch ausgebildet. Insbesondere kann der Nutenstein bei Profilen eingesetzt werden, die unterschiedliche Nutbreiten in Nutgrund, unterschiedlich breite Nutöffnungen und unterschiedliche Breiten zumindest einer Hinterschneidung aufweisen. Der Drehpunkt des Nutensteins muss nicht mittig in der hinterschnittenen Nut angeordnet sein. Dennoch ist eine Anlage an beiden Nutwandungen sicher gestellt.

Besondere Vorteile ergeben sich, wenn die Anlageflächen unterschiedlich weit von einem Drehpunkt des Nutensteins entfernt angeordnet sind bzw. eine Anlagefläche eine Stelle aufweist, die weiter vom Drehpunkt entfernt ist als alle Punkte der anderen Anlagefläche. Der Drehpunkt ist somit exzentrisch am Nutenstein angeordnet. Im Drehpunkt kann eine Befestigungsschraube des Nutensteins vorgesehen sein.

Gemäß einer Weiterbildung kann vorgesehen sein, dass die weiter vom Drehpunkt entfernte Anlagefläche stärker gekrümmt ist als die gegenüberliegende Anlagefläche. Wenn die vom Drehpunkt weiter entfernte Anlagefläche stärker gekrümmt ist, kann für unterschiedlichste Profilausgestaltungen eine Anlage der Anlagefläche an einer Nutwandung sichergestellt werden. Die weniger weit vom Drehpunkt entfernte Anlagefläche ist weniger stark gekrümmt, da der Abstand des Drehpunkts zu der Nutwandung, die mit der weniger stärker gekrümmten Anlagefläche zusammenwirkt, weniger stark variiert.

Besonders bevorzugt ist es, wenn am Nutenstein zumindest eine Ausnehmung für eine Stellungsfixierung zur Fixierung der Betriebsstellung des Nutensteins vorgesehen ist. Die Stellungsfixierung stellt sicher, dass der Nutenstein nicht in seine Montagestellung zurückgedreht werden kann. Dadurch wird eine zuverlässige Halterung des Bauteils an dem Profil sichergestellt.

Weitere Vorteile ergeben sich, wenn zumindest eine Ausnehmung für eine Stellungsanzeige vorgesehen ist. Durch die Stellungsanzeige kann einem Benutzer angezeigt werden, ob sich der Nutenstein in einer Montagestellung oder in einer Betriebsstellung befindet.

Um von der Drehrichtung des Nutensteins beim Übergang von einer Montagestellung in eine Betriebsstellung unabhängig zu sein, ist es vorteilhaft, wenn der Nutenstein an beiden Enden eine Ausnehmung für eine Stellungsanzeige und/oder Stellungsfixierung aufweist.

Besonders vorteilhaft ist es, wenn der Nutenstein stufenförmig ausgebildet ist. Dadurch kann sichergestellt werden, dass der Nutenstein die Hinterschneidungen der Nut hintergreift.

In den Rahmen der Erfindung fällt außerdem eine Nutensteinanordnung mit einem zu befestigenden Bauteil und einem erfindungsgemäßen Nutenstein, wobei eine Montagehilfe vorgesehen ist, die den Nutenstein in einer Montagestellung drehfest hält. Durch die Montagehilfe wird sichergestellt, dass sich der Nutenstein vor der Montage nicht in seine Betriebsstellung verdreht und somit stets eine Montage des Bauteils möglich ist. Vorzugsweise ist auch die Montagehilfe drehfest an dem zu befestigenden Bauteil angeordnet. Hierzu kann ein Vorsprung an der Montagehilfe dienen, der in eine Ausnehmung des zu befestigenden Bauteils eingreift. Dieser Vorsprung kann gleichzeitig als Stellungsanzeige und/oder Stellungsfixierung für den Nutenstein in einer Betriebsstellung dienen.

Gemäß einer bevorzugten Ausführungsform kann vorgesehen sein, dass die Montagehilfe zumindest teilweise elastisch ausgebildet ist und den Nutenstein von dem zu befestigenden Bauteil beabstandet hält. Dadurch wird sichergestellt, dass der Nutenstein beim Überführen in die Betriebsstellung nicht gegen die Hinterschneidungen der Nut gedreht wird sondern unter die Hinterscheidungen greift, Die Montagehilfe ist bevorzugt aus Kunststoff oder Federstahlblech ausgebildet.

Die drehfeste Halterung des Nutensteins in einer Montagestellung kann besonders einfach dadurch realisiert werden, dass die Montagehilfe Rippen aufweist, die in einer Montagestellung abschnittsweise seitlich, insbesondere stirnseitig, an dem Nutenstein anliegen. Der Nutenstein wird daher von der Montagehilfe seitlich umgriffen und dabei auch gleichzeitig ausgerichtet. Dadurch wird verhindert, dass sich der Nutenstein unabsichtlich verdrehen lässt. Eine oder mehrere der Rippen kann eine Nase aufweisen, die in eine Ausnehmung des Nutensteins greift, um den Nutenstein noch sicherer drehfest festzulegen.

Wie oben bereits erwähnt, ist es vorteilhaft, wenn die Stellungsanzeige und/oder Stellungsfixierung an der Montagehilfe angeordnet ist. Dabei kann an dem Bauteil ein Sichtfenster vorgesehen sein, in das ein Teil der Stellungsanzeige bei einer Montagestellung des Nutensteins ragt. Insbesondere kann ein Vorsprung der Montagehilfe in das Sichtfenster ragen. Durch den Vorsprung wird gleichzeitig eine Drehsicherung der Montagehilfe an dem Bauteil ausgebildet.

Ein besonders kostengünstiger Aufbau der Nutensteinanordnung ergibt sich, wenn die Stellungsfixierung gleichzeitig als Stellungsanzeige ausgebildet ist.

Besondere Vorteile ergeben sich, wenn die Stellungsanzeige ein Federelement umfasst. Das Federelement kann materialschlüssig mit der Montagehilfe verbunden sein. Der Vorsprung der Montagehilfe, der in das zu befestigende Bauteil bzw. dessen Sichtfenster ragt, dient gleichzeitig als Visualisierungshilfe für die Lage des Nutensteins. Wenn der Nutenstein zur Überführung in die Betriebsstellung verdreht wird, tritt der Nutenstein über die Stellungsanzeige hinweg. Somit gibt der Nutenstein die Stellungsanzeige frei. Der Vorsprung der Montagehilfe, der bisher vom Nutenstein heruntergedrückt wurde, federt weg. Somit ist kein Vorsprung mehr in dem Sichtfenster. Es ist anhand der Stellung des Vorsprungs im zu befestigenden Bauteil zu erkennen, ob der Nutenstein in einer Montagestellung oder in einer Betriebsstellung ist. Nachdem die Stellungsanzeige weggefedert ist, schlägt sie an einer Seite des Nutensteins an. Der Nutenstein kann nicht mehr in seine Montagestellung zurückgedreht werden. Wird der Nutenstein weitergedreht, schlägt er gegen die Nutwandungen. Anschließend kann der Nutenstein gegen den Hintergriff der hinterschnittenen Nut gezogen werden und somit das zu befestigende Bauteil mit dem Profil verspannt werden. Dabei kann vorgesehen sein, dass der Vorsprung der Montagehilfe noch weiter nach unten in die hinterschnittene Nut gezogen wird.

Vorzugsweise ist eine Befestigungsschraube in den Nutenstein eingeschraubt, wobei die Befestigungsschraube zunächst drehfest mit dem Nutenstein verbunden ist. Dies bedeutet, dass die Verschraubung zwischen Nutenstein und Schraube eine Schwergängigkeit aufweist, die größer ist als das Haltemoment der Montagehilfe. Dadurch wird sichergestellt, dass bei einer Verdrehung der Schraube zunächst der Nutenstein über die Verdrehsicherung, z.B. die Rippen der Montagehilfe, hinweg bewegt wird. Erst wenn der Nutenstein in Anlage mit den Nutwandungen ist, kann ein ausreichendes Drehmoment aufgebracht werden, um die Schraube relativ zum Nutenstein zu verdrehen. Dadurch wird dann der Nutenstein gegen die Hinterschneidungen der Nut gezogen. Die drehfeste Anordnung der Schraube an dem Nutenstein kann dadurch realisiert werden, dass ein Schraubensicherungslack verwendet wird, das Gewinde verprägt wird oder ein Gewinde mit Ober- bzw. Untermaß verwendet wird. Weitere Möglichkeiten zur drehfesten Festlegung der Schraube am Nutenstein sind ebenfalls denkbar.

In den Rahmen der Erfindung fällt außerdem ein Fenster, eine Tür oder dgl. mit einer erfindungsgemäßen Nutensteinanordnung.

Weitere Merkmale und Vorteile der Erfindung ergeben sich aus der nachfolgenden Beschreibung von Ausführungsbeispielen der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

Bevorzugte Ausführungsbeispiele der Erfindung sind in der Zeichnung schematisch dargestellt und werden nachfolgend mit Bezug zu den Figuren der Zeichnung näher erläutert. Es zeigen:
- Fig. 1: eine Draufsicht auf ein mittels Nutensteinen zu befestigendes Bauteil;
- Fig. 2: eine vergrößerte perspektivische Ansicht einer ersten Ausführungsform eines Nutensteins;
- Fig. 3: eine Schnittdarstellung durch den Nutenstein der Fig. 2;
- Fig. 4: eine Draufsicht auf das zu befestigende Bauteil mit verdrehten Nutensteinen;
- Fig. 5: eine vergrößerte Ansicht einer alternativen Ausführungsform eines Nutensteins;
- Fig. 6: eine Schnittdarstellung durch den Nutenstein der Fig. 5;
- Fig. 7: eine Draufsicht auf den Nutenstein der Fig. 5 in einer verdrehten Stellung des Nutensteins;
- Fig. 8: eine Darstellung der Montage eines Bauteils mit einem Nutenstein, wobei sich der Nutenstein in einer Montagestellung befindet;
- Fig. 9: eine der Fig. 8 entsprechende Darstellung, wobei der Nutenstein innerhalb der Nut verdreht ist;
- Fig. 10: eine den Fig. 8 und 9 entsprechende Darstellung, wobei der Nutenstein gegen die Hinterschneidungen der Nut gezogen ist.

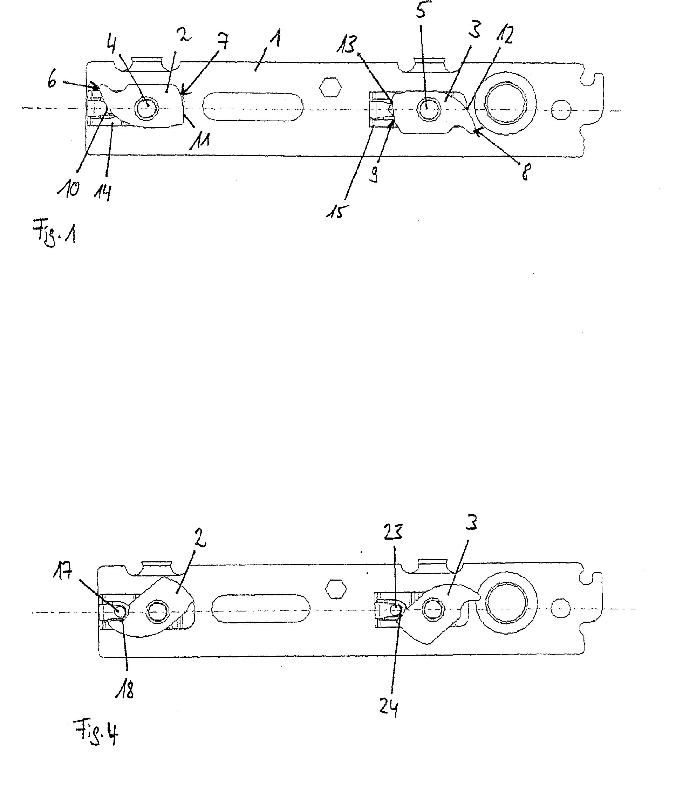

In der Figur 1 ist eine Ansicht von unten eines Bauteils 1 - in diesem Fall einer Grundplatte eines Ecklagerbeschlags - gezeigt, das mittels Nutensteinen 2, 3 an einem Profil mit einer hinterschnittenen Nut befestigt werden soll. Die Nutensteine 2, 3 sind in Längsrichtung des Bauteils 1 ausgerichtet und befinden sich somit in einer Montagestellung. Um in eine Betriebsstellung überführt zu werden, sind die Nutensteine 2, 3 um einen Drehpunkt 4, 5 drehbar. Die Nutensteine 2, 3 weisen jeweils zwei Enden 6, 7 bzw. 8, 9 auf, die gegenüberliegend angeordnet sind und unterschiedlich gekrümmte stirnseitige Anlageflächen 10, 11 bzw. 12, 13 aufweisen. Die Anlageflächen 10, 12 sind weiter vom Drehpunkt 4, 5 entfernt und sind stärker gekrümmt. Unter einer Anlagefläche 10, 12, die weiter vom Drehpunkt 4, 5 entfernt ist, wird hierbei eine Fläche verstanden, die zumindest eine Stelle bzw. Punkt aufweist, die bzw. der weiter vom Drehpunkt 4, 5 entfernt ist als alle Punkte der gegenüber liegenden Anlagefläche 11, 13.

In der gezeigten Montagestellung werden die Nutensteine 2, 3 durch Montagehilfen 14, 15 drehfest gehalten.

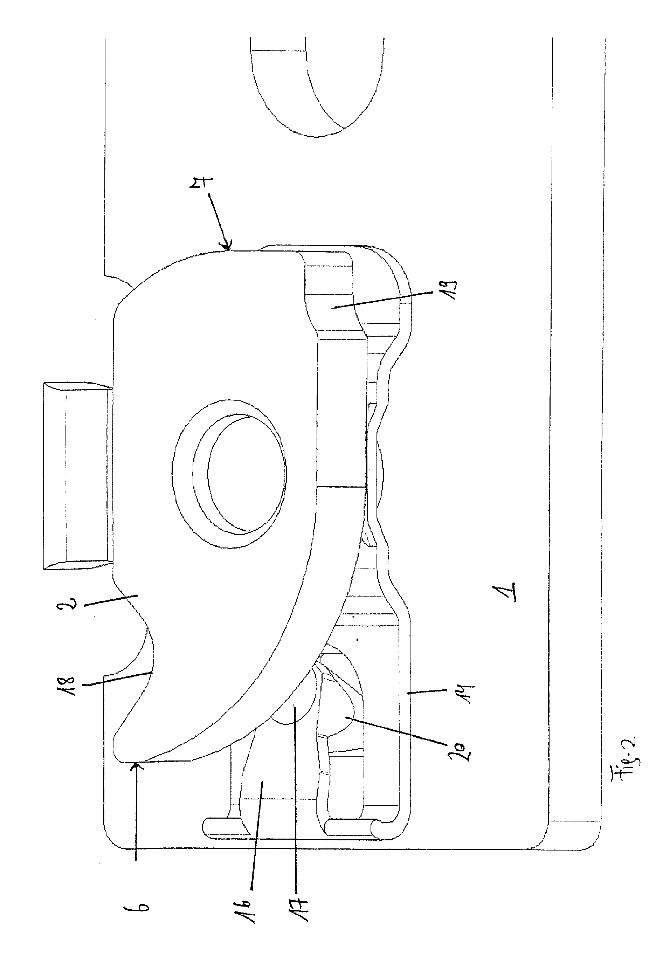

In der Figur 2 ist zu erkennen, dass die Montagehilfe 14 sich einerseits an dem Bauteil 1 und andererseits an dem Nutenstein 2 abstützt. Dadurch wird der stufenförmige Nutenstein 2 von dem Bauteil 1 beabstandet gehalten. Die Montagehilfe 14 ist elastisch ausgestaltet, um eine gewisse Kraft auf den Nutenstein 2 ausüben zu können. Mit der Montagehilfe 14 ist ein Federelement 16 materialschlüssig verbunden. Mit seinem Abschnitt 17 drückt das Federelement 16 gegen den Nutenstein 2 und hält ihn dadurch in seiner Montagestellung. Der Nutenstein 2 weist an beiden Enden 6, 7 Ausnehmungen 18, 19 auf, an denen ein Vorsprung 20 der Montagehilfe 14 zur Anlage kommen kann, wenn der Nutenstein 2 in eine Betriebsstellung verdreht wurde. Der Vorsprung 20 stellt eine Stellungsfixierung dar, da der Nutenstein 2 aufgrund des Zusammenwirkens der Ausnehmungen 18 bzw. 19 mit dem Vorsprung 20 nicht wieder in seine Montagestellung zurückgedreht werden kann, wenn der Vorsprung 20 aufgrund des Federelements 16, mit dem er verbunden ist, ausgefedert ist.

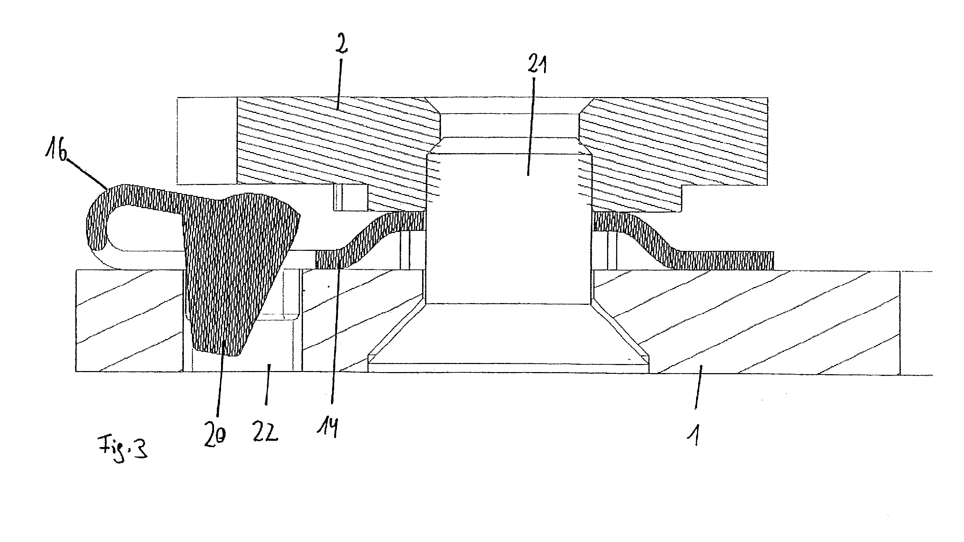

Der Schnittdarstellung der Figur 3 kann man entnehmen, dass der Nutenstein 2 durch die Montagehilfe 14 vom Bauteil 1 beabstandet gehalten wird. Zu erkennen ist auch eine Schraube 21, die teilweise in den Nutenstein 2 eingeschraubt ist. Der Vorsprung 20 durchragt zum einen die Montagehilfe 14 und ragt zum anderen in ein Sichtfenster 22 des Bauteils 1. Somit wird durch den Vorsprung 20 auch die Funktion einer Stellungsanzeige realisiert. Wenn der Vorsprung 20 in das Sichtfenster 22 ragt, wird der Vorsprung 20 durch den Nutenstein 2 in der gezeigten Stellung gehalten. Wird der Nutenstein 2 in eine Betriebsstellung verdreht, so gibt er den Vorsprung 20 frei, so dass dieser sich aufgrund des Federelements 16 aus dem Sichtfenster 22 bewegen kann. Dies bedeutet, dass sich der Nutenstein 2 in einer Betriebsstellung befindet. Gleichzeitig realisiert der Vorsprung 20 dann eine Stellungsfixierung für den Nutenstein 2. Das Federelement 16 kann als Bestandteil der Stellungsanzeige bzw. Stellungsfixierung aufgefasst werden.

In der Figur 4 sind die Nutensteine 2, 3 in einer verdrehten Stellung gezeigt. Die Abschnitte 17, 23 wurden freigegeben, so dass der Vorsprung 20 an der Ausnehmung 18 und ein entsprechender Vorsprung, der gegenüberliegend dem Abschnitt 23 angeordnet ist, an der Ausnehmung 24 des Nutensteins 3 anliegt. Die Nutensteine 2, 3 sind noch nicht in einer vollständigen Betriebsstellung, können jedoch nicht mehr in eine Montagestellung zurückbewegt werden.

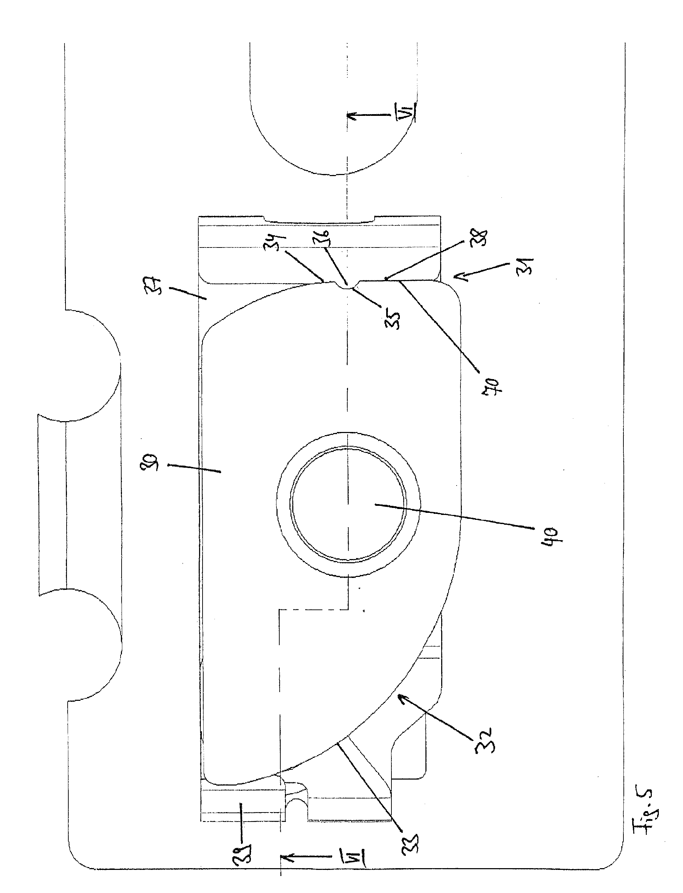

In der Figur 5 ist eine alternative Ausgestaltung eines Nutensteins 30 gezeigt. Auch der Nutenstein 30 weist an seinen gegenüberliegenden Enden 31, 32 unterschiedlich gekrümmte Anlageflächen 33, 34 auf. Die Anlagefläche 34 weist zudem noch eine Ausnehmung 35 auf, in die eine Nase 36 der Montagehilfe 37 eingreift. Die Nase 36 ist an einer Rippe 38 angeordnet. An die Ausnehmung 35 schließt sich eine ebene Fläche 70 an, die ein Überdrehen des Nutensteins 30 in der Nut verhindert.

Das Ende 32 wird durch eine Rippe 39 gehalten, so dass der Nutenstein 30 in einer Montagestellung drehfest festgelegt ist. Beim Verdrehen des Nutensteins 30 werden die Rippen 38, 39 ausgelenkt, so dass sich der Nutenstein 30 in eine Betriebsstellung bewegen kann. Der Nutenstein 30 ist bezüglich seines Drehpunktes 40 unsymmetrisch ausgebildet.

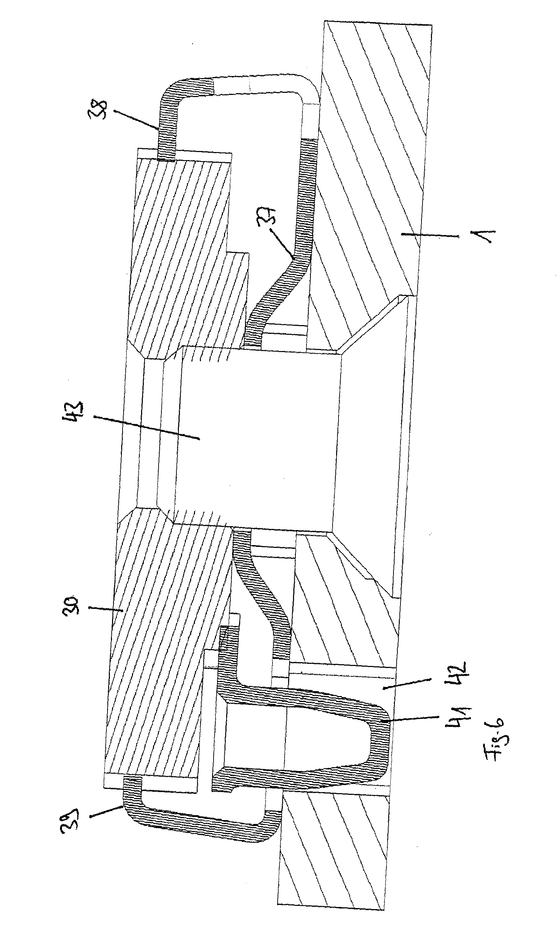

In der Figur 6 ist eine Schnittdarstellung durch die in der Figur 5 gezeigte Anordnung entlang der Linie VI - VI gezeigt. Auch hier ist zu sehen, dass ein Vorsprung 41 von dem Nutenstein 30 in einem Sichtfenster 42 gehalten wird. Die Montagehilfe 37 hält den Nutenstein 30 von dem Bauteil 1 beabstandet. Außerdem ist in dieser Darstellung gut zu erkennen, dass der Nutenstein 30 stufenförmig ausgebildet ist. Der Nutenstein 30 ist über eine Schraube 43 an dem Bauteil 1 gehalten.

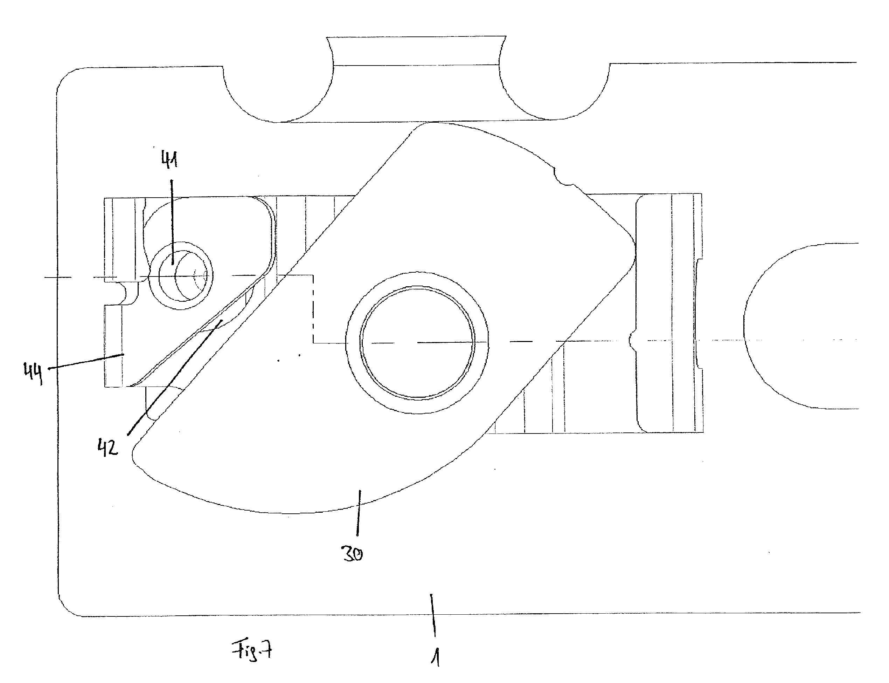

Die Figur 7 zeigt den Nutenstein 30 in einer verdrehten Stellung. Aufgrund des Federelements 44 hat sich der Vorsprung 41 aus dem Sichtfenster 42 bewegt, so dass eine von der Montagestellung abweichende Situation angezeigt wird. Dadurch, dass das Federelement 44 freigegeben wurde, blockiert es nun den Nutenstein 30, sodass dieser nicht wieder zurück in seine Montagestellung überführt werden kann.

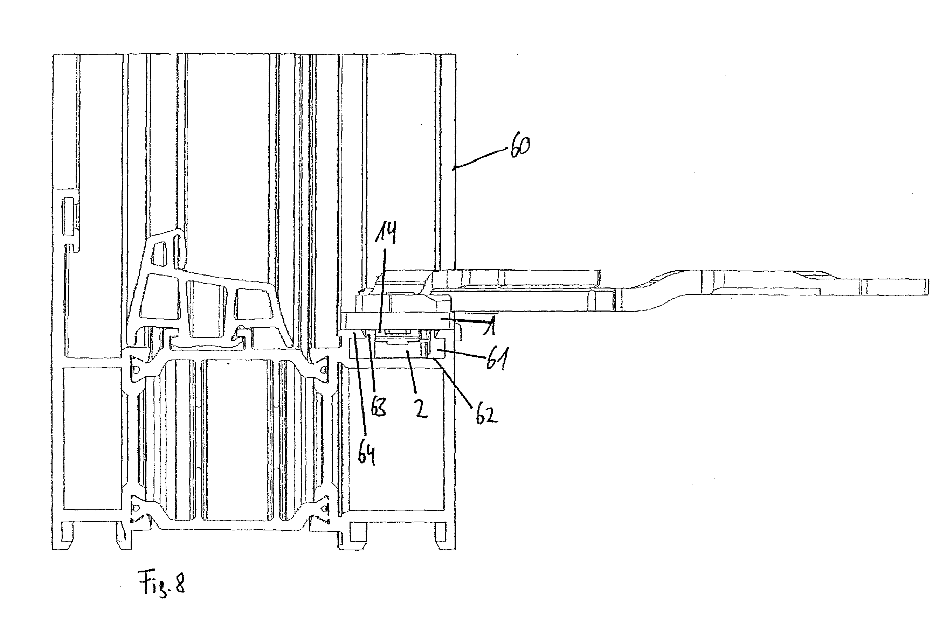

Die Figur 8 zeigt ein Rahmenprofil 60 mit einer hinterschnittenen Nut 61. Je nach Ausführungsform des Rahmenprofils 60 kann die Breite der hinterschnittenen Nut 61 im Nutgrund 62, der Nutöffnung 63 und die Breite der Hinterschneidung 64 variieren. Die in den vorherigen Figuren gezeigten Nutensteine sind geeignet, das Bauteil 1 zu befestigen, auch wenn die genannten Variationen von Profil zu Profil bestehen.

In der Figur 8 befindet sich der Nutenstein 2 in einer Montagestellung. Er kann daher durch die Nutöffnung 63 eingeführt werden. Durch die Montagehilfe 14 wird er dort zum einen drehfest gehalten und zum anderen von dem Bauteil 1 beabstandet gehalten.

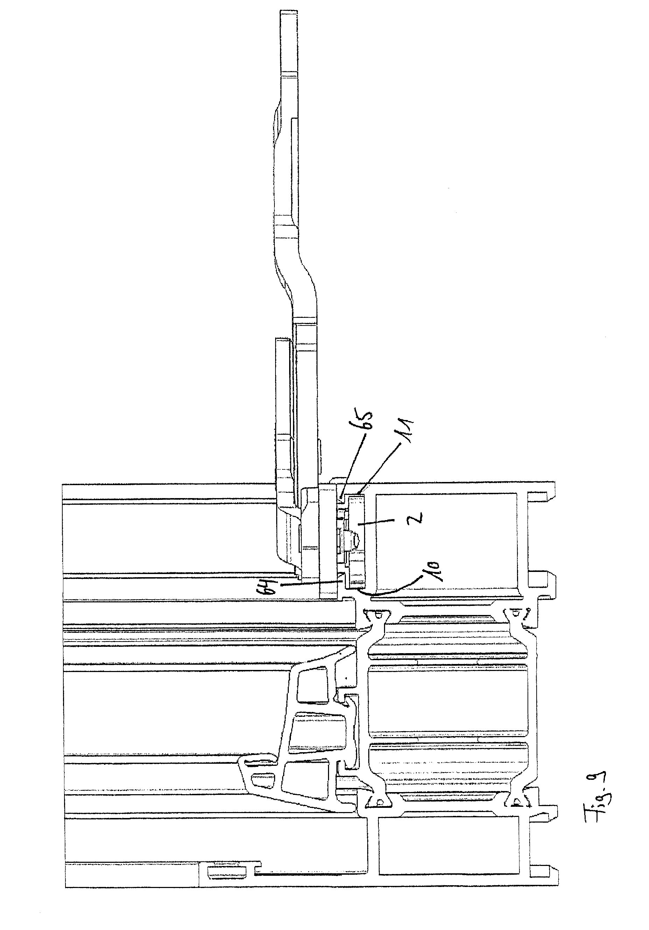

In der Figur 9 wurde der Nutenstein 2 aus seiner Montagestellung heraus verdreht, so dass die Anlageflächen 10, 11 an den Nutwandungen der hinterschnittenen Nut 61 anliegen. Zu erkennen ist, dass der Nutenstein 2 von den Hinterschneidungen 64, 65 beabstandet ist. Bis zur Anlage der Flächen 10, 11 an den Nutwandungen der Nut 61 ist die Schraube 21 drehfest mit dem Nutenstein 2 verbunden. Dadurch kann der Widerstand der Montagehilfe 14, die bestrebt ist, den Nutenstein 2 in seiner Montagestellung zu halten, überwunden werden. Die Schwergängigkeit der Schraube 20 kann durch Einbringen eines Lacks oder dgl. bewirkt werden.

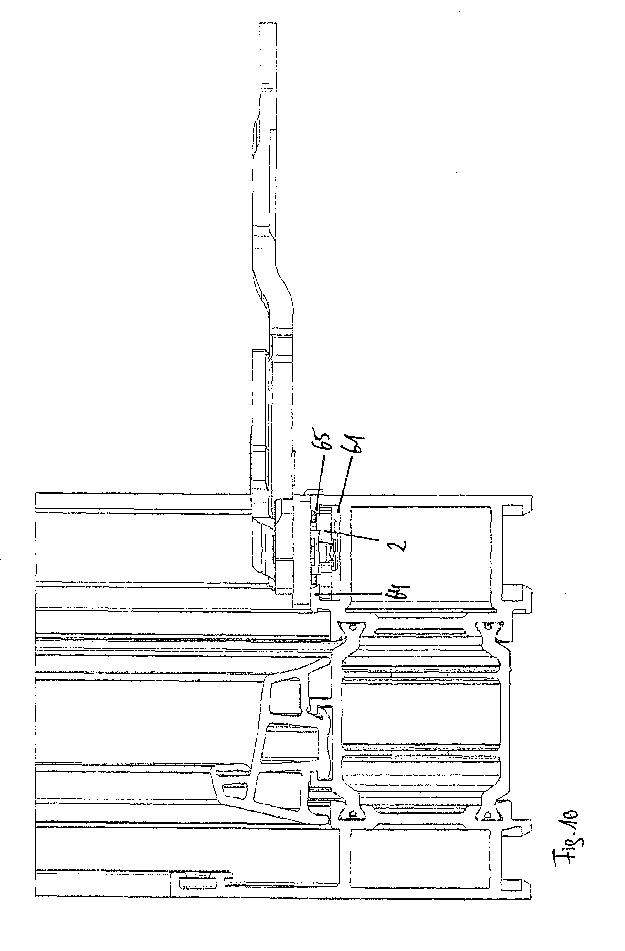

Wird nun ein genügend hohes Drehmoment aufgebracht, so kann die Schraube 20 relativ zum Nutenstein 2 verdreht werden und es stellt sich die in der Figur 10 gezeigte Situation ein, wobei der Nutenstein 2 an den Hinterschneidungen 64, 65 anliegt und das Bauteil 1 an der hinterschnittenen Nut 61 verklemmt. Dies bedeutet, dass die Hinterschneidungen 64, 65 zwischen den Nutenstein 2 und das Bauteil 1 eingeklemmt sind.

## Patentansprüche

1. Nutenstein (2, 3, 30) zur Befestigung eines Bauteils (1) an einer hinterschnittenen Nut (61) eines Fensters, einer Tür oder dgl., mit zwei sich gegenüber liegenden Enden (6, 7; 8, 9; 31, 32), **dadurch gekennzeichnet, dass** die gegenüber liegenden Enden (6, 7; 8, 9; 31, 32) unterschiedlich gekrümmte stirnseitige Anlageflächen (10, 11; 12, 13; 33, 34) zur Anlage an einer Nutwand aufweisen.

2. Nutenstein nach Anspruch 1, **dadurch gekennzeichnet, dass** der Nutenstein (2, 3, 30) bezüglich einer Mittenlängsebene und/oder einem Drehpunkt unsymmetrisch ausgebildet ist.

3. Nutenstein nach einem der vorhergehenden Ansprüche, **dadurch gekennzeichnet, dass** die Anlageflächen (10, 11; 12, 13; 33, 34) unterschiedlich weit von einem Drehpunkt (4, 5, 40) des Nutensteins (2, 3, 30) entfernt angeordnet sind.

4. Nutenstein nach Anspruch 3, **dadurch gekennzeichnet, dass** die weiter vom Drehpunkt (4, 5, 40) entfernte Anlagefläche (10, 12, 33) stärker gekrümmt ist als die gegenüber liegende Anlagefläche (11, 13, 34).

5. Nutenstein nach einem der vorhergehenden Ansprüche, **dadurch gekennzeichnet, dass** am Nutenstein (2, 3) zumindest eine Ausnehmung (18, 19, 24) für eine Stellungsfixierung zur Fixierung der Betriebsstellung des Nutensteins (2, 3) vorgesehen ist.

6. Nutenstein nach einem der vorhergehenden Ansprüche, **dadurch gekennzeichnet, dass** zumindest eine Ausnehmung (18, 19, 24) für eine Stellungsanzeige vorgesehen ist.

7. Nutenstein nach einem der vorhergehenden Ansprüche, **dadurch gekennzeichnet, dass** er stufenförmig ausgebildet ist.

8. Nutenstein nach einem der vorhergehenden Ansprüche, **dadurch gekennzeichnet, dass** der Nutenstein eine Fläche (70) aufweist, die ein Überdrehen des Nutensteins verhindert.

9. Nutensteinanordnung mit einem zu befestigenden Bauteil und mit einem Nutenstein nach einem der vorhergehenden Ansprüche, **dadurch gekennzeichnet, dass** eine Montagehilfe (14, 15, 37) vorgesehen ist, die den Nutenstein (2, 3, 30) in einer Montagestellung drehfest hält.

10. Nutensteinanordnung nach Anspruch 9, **dadurch gekennzeichnet, dass** die Montagehilfe (14, 15, 37) zumindest teilweise elastisch ausgebildet ist und den Nutenstein (2, 3, 30) von dem zu befestigenden Bauteil (1) beabstandet hält.

11. Nutensteinanordnung nach einem der vorhergehenden Ansprüche 10 oder 11, **dadurch gekennzeichnet, dass** die Montagehilfe (37) Rippen (38, 39) aufweist, die in einer Montagestellung abschnittweise seitlich an dem Nutenstein (30) anliegen.

12. Nutensteinanordnung nach einem der vorhergehenden Ansprüche 9 bis 11, **dadurch gekennzeichnet, dass** die Stellungsanzeige und/oder Stellungsfixierung an der Montagehilfe (14, 15, 37) angeordnet ist.

13. Nutensteinanordnung nach einem der vorhergehenden Ansprüche 9 bis 12, **dadurch gekennzeichnet, dass** an dem Bauteil (1) ein Sichtfenster (22, 42) vorgesehen ist, in das ein Teil der Stellungsanzeige bei einer Montagestellung des Nutensteins (2, 3, 30) ragt.

14. Nutensteinanordnung nach einem der vorhergehenden Ansprüche 9 bis 13, **dadurch gekennzeichnet, dass** eine Befestigungsschraube (22, 43) in den Nutenstein (2, 3, 30) eingeschraubt ist, wobei die Befestigungsschraube (22, 43) zunächst drehfest mit dem Nutenstein (2, 3, 30) verbunden ist.

15. Fenster, Tür oder dgl. mit einer Nutensteinanordnung nach einem der vorhergehenden Ansprüche 9 bis 14.
